Europäisches Patentamt

(19) European Patent Office

Office européen des brevets

(11) Publication number : **0 478 526 A1**

(12) **EUROPEAN PATENT APPLICATION**

(21) Application number : **91870146.7**

(22) Date of filing : **20.09.91**

(51) Int. Cl.⁵ : **A23L 1/314, A23C 7/04**

(30) Priority : **21.09.90 BE 9000905**

(43) Date of publication of application :
**01.04.92 Bulletin 92/14**

(84) Designated Contracting States :
**BE DE FR GB NL**

(71) Applicant : **VLEESWARENFABRIEKEN
IMPERIAL NAAMLOZE VENNOOTSCHAP
Grote Baan 200
B-9920 Lovendegem (BE)**

(72) Inventor : **Vandendriessche, Frank
Dopheidelaan 78
B-8210 Loppem-Zedelgem (BE)**

(74) Representative : **Donné, Eddy
Bureau M.F.J. Bockstael nv Arenbergstraat 13
B-2000 Antwerpen (BE)**

(54) Method for preparing a food product on the basis of meat and food product thus prepared.

(57)   Method for preparing a food product on the
basis of meat, characterized in that a meat
material is mixed with a dairy product and that
this mixture is subjected to a fermentation.

EP 0 478 526 A1

The invention relates to a method for preparing a food product on the basis of meat.

The prior art methods start exclusively from pure meat material which is subjected to fermentation.

The invention aims to provide such a method whereby it is possible to obtain a food product with a totally different new taste.

For this purpose a meat material is mixed with a dairy product, and this mixture is subjected to fermentation.

In a special embodiment of the invention, curdled bactofugated milk or a derivative thereof is used as dairy product.

For instance, melted cheese or curd can be used as a derivative product.

In a remarkable embodiment of the invention one starts from 10-50 weight % dairy product and 90-50 weight % meat material.

For the fermentation, additives may be added to this mixture, such as salt, spices etc.

In a preferred embodiment of the invention, the fermented mixture is dried.

The invention also relates to the food product prepared according to the method according to one of the previous embodiments.

Other characteristics and advantages of the invention will appear from the following description of a method for preparing a food product on the basis of meat and of a thus prepared food product according to the invention. This description is only given as an example and does not limit the invention.

The food product according to the invention principally consists of a fermented mixture of a dairy product and a meat material in the proportion 10-50 weight % dairy product to 90-50 weight % meat product, particularly in the proportion 20-30 weight % dairy product to 80-70 weight % meat material.

As dairy product one starts from bactofugated milk. This milk is subjected to a curdling process at 25 to 40 degrees Celsius, for instance at 30 to 34 degrees Celsius. The curdling takes place with known curdling agents, for instance a rennet ferment, other proteolytic enzymes from vegetable or microbic origin etc. For the curdling one also adds lactic acid ferments such as for instance: lactobacillus homofermentative sp., streptococcus lactis, S cremoris, propionumbacterium.

Consequently, the obtained curd is cut to stimulate the syneresis.

The thus obtained "half dry" curd presents a lactose content of maximum 0,5%, for instance between 0,3 and 0,5%, a pH of 5,0 to 5,6, a moisture content of minimum 30%, for instance between 42 to 44% and a fat content smaller than of equal to 35% calculated on the fresh product.

In an alternative method, one starts from cheese, which is a product derived from curdled bactofugated milk.

In both embodiments one uses a meat material having a fat content of maximum 50% and a collagene content of maximum 15%. Both pork meat, beef meat and mixtures of both may be used.

One reduces the meat material in a so-called meat grinder or cutter to the required grain dimension between 1 and 8 millimeters at a temperature of approximately zero degree Celsius.

A mixture is now prepared with 90 to 50 weight %, particularly 80 to 70 weight %, of the meat material and 10 to 50 weight %, particularly 20 to 30 weight % of the dairy product. Thereto one may possibly add small amounts of auxiliary materials, namely salt and spices. For instance, one adds 3% salt, calculated with respect to the fresh product, amongst which 0,6% $NaNO_2$.

The thus obtained mixture is stuffed in a kind of intestinal casing appropriate for fermented sausage preparation or it is compacted in the required shape.

The mixture is now subjected to a fermentation with an incubation at 18 to 35 degrees Celsius and for instance between 30 and 35 degrees Celcius, and a relative humidity between 80 and 100%, for instance between 98 and 100%, until a pH of 4,6 to 5,2 for instance of 4,7 is reached. The further syneresis of the curd takes care of a diffusion of lactose to the meat. The lactose is used as a hydrocarbon source for the fermentation of the lactic acid.

Yet, one can also use an added hydrocarbon as a fermentation source.

Finally the fermented mixture is dried at a temperature of 10 to 18 degrees Celsius and a relative humidity between 60 and 90% until the water activity aw equals 0,95 to 0,82. For instance, one dries at 10 degrees Celsius and a relative humidity between 58 and 62% until the water activity aw equals 0,93.

The thus obtained product may further be finished by a covering on the basis of parafin, gelatin or polyvinylacetate.

The invention is in no way restricted to the embodiment described above and, within the frame of the Patent application, numerous alterations may be brought to the described embodiments.

## Claims

1.- Method for preparing a food product on the basis of meat, characterized in that a meat material is mixed with a dairy product and that this mixture is subjected to a fermentation.

2.- Method according to the above claim, characterized in that one uses curdled bactofugated milk as dairy product or a derivative product thereof.

3.- Method according to the above claim, characterized in that, for the preparation of the dairy product, bactofugated milk is subjected to a curdling process with a curdling agent at a temperature of 25 to 40 deg-

**EP 0 478 526 A1**

rees Celsius.

**4.-** Method according to claim 2, characterized in that cheese or curd is used as dairy product.

**5.-** Method according to one of the previous claims, characterized in that one uses a milk product having a lactose content of maximum 0,5% and a pH between 5,0 and 5,6.

**6.-** Method according to the above claim, characterized in that one uses a dairy product having a fat content of maximum 35 weight % and a moisture content of minimum 30%.

**7.-** Method according to one of the previous claims, characterized in that one uses a meat material having a fat content of maximum 50% and a collagene content of maximum 15%.

**8.-** Method according to one of the previous claims, characterized in that, for the mixing, the meat material is reduced to the required grain dimension between 1 and 8 mm.

**9.-** Method according to one of the previous claims, characterized in that one mixes 10 to 50 weight % dairy product with 90 to 50 weight % meat material.

**10.-** Method according to one of the previous claims, characterized in that one mixes 20 to 30 weight % dairy products with 80 to 70 weight % meat material.

**11.-** Method according to one of the previous claims, characterized in that, for the fermentation, one adds small quantities of at least one of the following additives: salt and spices.

**12.-** Method according to one of the previous claims, characterized in that the fermentation is carried out by an incubation at 18 to 35 degrees Celsius and a relative humidity of 80 to 100%.

**13.-** Method acording to one of the previous claims, characterized in that one performs the fermentation until a pH of 5,2 to 4,6 is reached.

**14.-** Method according to one of the previous claims, characterized in that the fermented mixture is dried.

**15.-** Method according to the above claim, characterized in that one dries until a water activity aw equal to 0,95 to 0,82 is reached.

**16.-** Method according to one of the claims 14 and 15, characterized in that one dries at 10 to 18 degrees Celsius and a relative humidity between 60 and 90%.

**17.-** Food product prepared according to the method of one of the previous claims.

**European Patent Office**

**EUROPEAN SEARCH REPORT**

Application Number

EP 91 87 0146

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 029 503 (STAUFFER CHEM. CO.) <br> * Claims 1-7; example 1; page 6, lines 4-15; pages 9-11 * | 1,11,13 -14,17 | A 23 L 1/314 <br> A 23 C 7/04 |
| A | NETH. MILK DAIRY J., vol. 27, 1973, pages 30-44; T.E. GALESLOOT et al.: "The keeping quality of tinned processed cheese manufactured from cheese made from bactofugated milk" <br> * Abstract * | 2,4 | |
| A | US-A-2 888 351 (F.C. OLSON) <br> * Example 4 * | 4 | |
| A | DE-A- 668 457 (WIEDEMANN) <br> * Page 1, lines 10-12 * | 4 | |

TECHNICAL FIELDS SEARCHED (Int. Cl.5)

A 23 L
A 23 C

The present search report has been drawn up for all claims

| Place of search | Date of completion of the search | Examiner |
|---|---|---|
| THE HAGUE | 22-11-1991 | SANTOS Y DIAZ A.I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)